Europäisches Patentamt

European Patent Office

Office européen des brevets

(11) Veröffentlichungsnummer : **0 168 588**
**B1**

(12) **EUROPÄISCHE PATENTSCHRIFT**

(45) Veröffentlichungstag der Patentschrift :
23.03.88

(21) Anmeldenummer : 85106011.1

(22) Anmeldetag : 15.05.85

(51) Int. Cl.⁴ : **F 42 B   3/04**, B 60 R 21/26

(54) Gasgenerator.

(30) Priorität : **13.07.84 DE 3425836**

(43) Veröffentlichungstag der Anmeldung :
**22.01.86 Patentblatt 86/04**

(45) Bekanntmachung des Hinweises auf die Patenterteilung : **23.03.88 Patentblatt 88/12**

(84) Benannte Vertragsstaaten :
**DE FR GB IT SE**

(56) Entgegenhaltungen :
**DE-B- 1 278 288**
**DE-B- 2 460 427**
**DE-C-   906 164**
**FR-A- 1 022 532**
**GB-A- 2 022 194**
**US-A- 3 080 714**
**US-A- 3 902 746**

(73) Patentinhaber : **Bayern-Chemie Gesellschaft für flugchemische Antriebe mit beschränkter Haftung**
**D-8261 Aschau a. Inn (DE)**

(72) Erfinder : **Nilsson, Karl Erik**
**Uhlandstrasse 51**
**D-8012 Ottobrunn (DE)**
Erfinder : **Lang, Rüdiger**
**Metzstrasse 5**
**D-8000 München 80 (DE)**
Erfinder : **Buhl, Wolfgang, Dr.**
**Johann-Strauss-Strasse 42**
**D-8011 Baldham (DE)**

(74) Vertreter : **Frick, Gerhard**
**Harthausener Strasse 18 Ortsteil Neukeferloh**
**D-8011 Grasbrunn (DE)**

**Beschreibung**

Die Erfindung bezieht sich auf einen Gasgenerator, insbesondere für ein Fahrzeug-Sicherheitssystem, nach dem Oberbegriff des Patentanspruchs 1.

Derartige Gasgeneratoren, bei denen ein einschließlich Treibstoffladung und Zünder fertig vormontiertes Innengehäuse als selbständige Baueinheit in einen verbraucherseitigen Außenmantel eingesetzt wird, finden in kleineren Baugrößen etwa im Kraftfahrzeugbau als Treibgaserzeuger für Gurtstrammer oder als Zündgasgenerator (siehe GB-A-2 022 194) für den Festtreibstoffsatz eines aufblasbaren Schutzkissens Verwendung und müssen trotz einer kostengünstigen, gewichtsparenden Bauweise strengen Sicherheitsanforderungen genügen. In dieser Hinsicht besonders problematisch ist bei den bekannten Gasgeneratoren der beanspruchten Art die Befestigung des relativ dünnwandigen Treibstoffbehälters am Zündträger, die bei bereits eingefüllter Treibstoffladung hergestellt und im Betriebsfall dem hohen Heißgas-Innendruck standhalten muß. Wird für diese zündträgerseitige Befestigung des Treibstoffbehälters eine durch Kaltumformung nach Art einer Blechnaht fertigungstechnisch einfach ausgebildete Verbindung vorgesehen, so bedarf diese aus Gründen einer ausreichenden mechanischen Festigkeit einer zusätzlichen Verstärkung, etwa einer zum Schutz gegen die im Behälter befindliche Treibstoffladung im Elektronenstrahlverfahren hergestellten, zusätzlichen Schweiß- oder einer Klebenaht, was für derartige Gasgeneratoren einen erheblichen, fertigungs- und kostenmäßigen Mehraufwand mit sich bringt.

Aufgabe der Erfindung ist es, den Gasgenerator der beanspruchten Art so zu verbessern, daß er in kostensparender Weise hochgradig sicher ausgebildet ist, ohne daß für den Treibstoffbehälter eine stoffschlüssige, also verklebte oder verschweißte Befestigung am Zündträger benötigt wird.

Diese Aufgabe wird erfindungsgemäß durch den im Anspruch 1 gekennzeichneten Gasgenerator gelöst.

Bei dem erfindungsgemäßen Gasgenerator wird eine ganz wesentliche Fertigungserleichterung dadurch erzielt, daß durch reine Axialanpressung des Zündträgers zusammen mit dem Treibstoffbehälter gegen eine als Werkzeug wirkende Anschlagfläche die Randlippe des Zündträgers radial nach innen über den kragenförmigen Treibstoffbehälterrand gebogen wird, mit der Besonderheit, daß die so hergestellte Befestigungsnaht nach dem Einbau des Zündträgers und Treibstoffbehälters in den Außenmantel infolge der zwangsweisen Anlage der Randlippe an der Anschlagfläche des Außenmantels auch ohne zusätzliche stoffschlüssige Verbindung wirksam gegen ein Aufplatzen unter Druck gesichert ist. Die erfindungsgemäße Gasgeneratorkonstruktion mit ihrer trotz einfachster Herstellung wirksam gesicherten, zündträgerseitigen Befestigung des Treibstoffbehälters eignet sich somit in hervorragender Weise für eine kostensparende Fertigung vor allem in Großserie.

Zur exakten Fixierung des Treibstoffbehälters am Zündträger bei Herstellung der Befestigungsnaht und zur radialen Versteifung des zündträgerseitigen Behälterendes ist der Zündträger in weiterer vorteilhafter Ausgestaltung gemäß Anspruch 2 mit einer den erweiterten Behälterrand aufnehmenden Ringnut versehen, deren radial äußere Nutseitenwand die über den Behälterrand gebogene Randlippe bildet. Gemäß Anspruch 3 wird die Randverbindung des Zündträgers mit dem einschubseitigen Endabschnitt des Außenmantels vorzugsweise so gestaltet, daß die Randlippe des Zündträgers im eingebauten Zustand des Innengehäuses an die Anschlagfläche des Außenmantels angepreßt wird, wodurch die Befestigungsnaht zwischen Zündträger und Treibstoffbehälter noch stärker gesichert wird.

Gemäß Anspruch 4 ist zweckmäßigerweise zwischen einem in den Treibstoffbehälter eingreifenden Zündträgerabschnitt und einem sockelförmigen Abschnitt des am Zündträger befestigten Zünders eine mit der Behälterinnenwand zusammenwirkende Ringdichtung angeordnet, was den Vorteil hat, daß sich der Zündträger und der daran befestigte Zünder leichter mit dem Treibstoffbehälter zusammenbauen lassen und durch die zwischen Zünder und Zündträger ohnehin erforderliche Dichtung gleichzeitig auch eine Abdichtung der durch die Randlippe gebildeten Befestigungsnaht bewirkt wird. Im Hinblick auf einen verbesserten zwangsweisen Einschluß des Innengehäuses im Außenmantel, vor allem auch im Bereich der Randlippe, empfiehlt es sich, das Innengehäuse gemäß Anspruch 5 engsitzend in einer abgestuften Innenbohrung des Außenmantels anzuordnen.

Gemäß einem weiteren, besonders bevorzugten Aspekt der Erfindung ist der Treibstoffbehälter nach Anspruch 6 mit seinem abströmseitigen, dem Zündträger gegenüberliegenden Behälterende an einer weiteren, stufenförmig abgesetzten Anschlagfläche des Außenmantels abgestützt, wodurch die Befestigungsnaht zwischen Zündträger und Treibstoffbehälter von den unter der Wirkung des Heißgas-Innendrucks erzeugten Trennkräften entlastet und somit die Bausicherheit des Gasgenerators erheblich gesteigert wird. Gemäß Anspruch 7 ist der am abströmseitigen, dem Zündträger gegenüberliegenden Behälterende angeordnete Behälterboden des Treibstoffbehälters vorzugsweise nach innen gewölbt ausgebildet, um die im allgemeinen durch eine örtliche Wandstärkenverringerung im mittleren Teil des Behälterbodens nach Art einer Platzmembran definierte, die Abströmöffnung bildende Aufreißzone des Treibstoffbehälters bei der Handhabung und dem Einbau des als selbständige Einheit vormontierten Innengehäuses in einfacher Weise gegen eine Beschädigung zu schützen. Schließlich wird durch die nach Anspruch 8 vorgesehene, beim Zusammenbau von Zündträger und Treibstoffbehälter selbsttätig unter Vorspannung gesetzte Siebscheibe in einfacher Weise sichergestellt, daß die Festtreibstoffteilchen nicht nur während des Abbrands im Treibstoffraum zurückgehalten, sondern auch bis zur Aktivierung des Gasgenerators gleichbleibend dicht verpreßt und gegen einen vibrationsbedingten Abrieb geschützt werden.

Die Erfindung wird nunmehr anhand eines Ausführungsbeispiels in Verbindung mit den Zeichnungen näher erläutert. Es zeigen :

Fig. 1 die Einzelteile eines Gasgenerators, teilweise im Schnitt, vor dem Zusammenbau ; und

Fig. 2 den Gasgenerator im vollständig zusammengebauten Zustand.

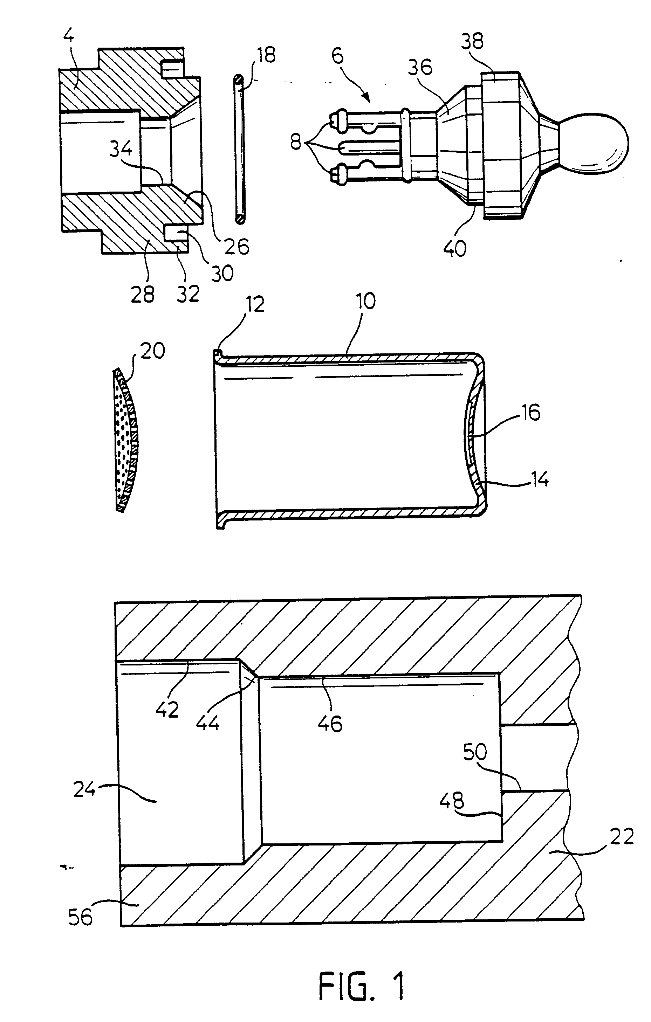

Der Gasgenerator 2 enthält gemäß Fig. 1 als Einzelelemente einen ringförmigen Zündträger 4 aus Metall, einen sockelförmigen Zünder 6 mit mehreren elektrischen Anschlußstiften 8, einen als dünnwandige, tiefgezogene Metallbuchse ausgebildeten Treibstoffbehälter 10 mit einem kragenförmig erweiterten Behälterrand 12 und einem konkav nach innen gewölbten Behälterboden 14, dessen mittlerer Bereich 16 eine verringerte Wandstärke aufweist und unter der Wirkung des Heißgas-Innendrucks bei Aktivierung des Gasgenerators 2 nach Art einer Platzmembran aufreißt, sowie eine O-Ringdichtung 18, eine gewölbte Siebscheibe 20 und einen relativ dickwandigen, rohrförmigen, mit dem Heißgas-Verbraucher (nicht gezeigt) verbundenen Außenmantel 22 mit einer abgestuften Innenbohrung 24.

Der Zündträger 4 ist mit einem axial vorstehenden Zündträgerabschnitt 26, dessen Durchmesser dem Innendurchmesser des Treibstoffbehälters 10 entspricht, sowie mit einem mittleren, erweiterten Bund 28 versehen, an dessen Stirnseite eine den kragenförmigen Behälterrand 12 aufnehmende Ringnut 30 ausgebildet ist, deren radial äußere Nutseitenwand eine axial vorstehende Randlippe 32 bildet. Ferner enthält der Zündträger 4 eine konisch erweiterte Aufnahmebohrung 34, in die der entsprechende Sockel 36 des Zünders 6 eingesetzt wird. Dieser ist ebenfalls mit einem erweiterten, engsitzend in den Treibstoffbehälter 10 einschiebbaren Ringbund 38 versehen, der an den konischen Zündsockelabschnitt 36 über eine stufenförmig abgesetzte Ringschulter 40 für die O-Ringdichtung 18 anschließt.

Die Innenbohrung 24 des Außenmantels 22 besteht aus einem im Durchmesser auf den Durchmesser des Zündträgerbundes 28 erweiterten Bohrungsabschnitt 42 am Einschubende des Außenmantels 22 und einem über eine stufenförmig abgesetzte Anschlagfläche 44 daran anschließenden, mittleren Bohrungsabschnitt 46, in den der Treibstoffbehälter 10 engsitzend einschiebbar ist und der über eine weitere, stufenförmige Anschlagfläche 48 in eine im Querschnitt verengte, verbraucherseitige Abströmöffnung 50 mündet.

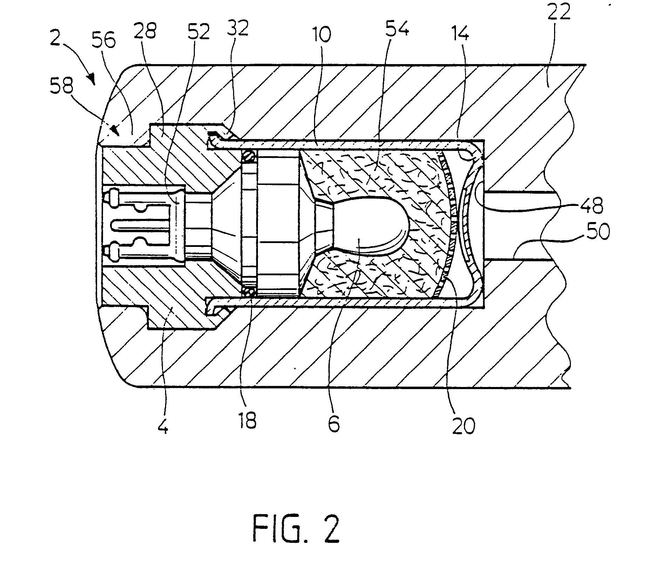

Zum Zusammenbau des Gasgenerators 2 wird zunächst die Ringdichtung 18 auf dem schulterförmigen Abschnitt 40 des Zünders 6 angeordnet und dieser in der Aufnahmebohrung 34 des Zündträgers 4 dadurch befestigt, daß der Zündersockel 36 — wie in Fig. 2 durch das Bezugszeichen 52 angedeutet — wulstförmig ausgebildet ist. Nach dem Einsetzen der Siebscheibe 20 und dem Einfüllen einer dosierten Treibstoffmenge 54 in den Treibstoffbehälter 10 wird der aus Zünder 6 und Zündträger 4 bestehende Teilzusammenbau in das offene Treibstoffbehälterende eingeschoben, bis der erweiterte Behälterrand 12 am Nutgrund der Ringnut 30 anliegt, wodurch das Treibstoffpulver 54 zusammengedrückt und die in der Mitte am nach innen gewölbten Behälterboden 14 anliegende Siebscheibe 20 unter Vorspannung gesetzt wird. In dieser Lage werden der Zündträger 4 und der Treibstoffbehälter 10 gemeinsam axial an eine der Anschlagfläche 44 entsprechende, konische Werkzeugfläche angepreßt, so daß die Randlippe 32 radial nach innen den kragenförmigen Behälterrand 12 engsitzend übergreifend abgebogen und somit der Treibstoffbehälter 10 über eine durch Kaltumformung hergestellte Befestigungsnaht mit dem Zündträger 4 verbunden wird. Das auf diese Weise aus Zündträger 4 und Treibstoffbehälter 10 einschließlich der Teile 6, 18, 20 und der Treibstoffüllung 54 vormontierte Innengehäuse bildet eine hermetisch gekapselte, gewichtsmäßig leichte, selbständige Baueinheit, die als Ganzes separat vom Außenmantel 22 gehandhabt, etwa transportiert oder gelagert werden kann und zur Endmontage des Gasgenerators 2 vom Einschubende des Außenmantels 22 aus in dessen Innenbohrung 24 eingesetzt und so fest angedrückt wird, daß die Randlippe 32 durch die Anschlagfläche 44 in Axialrichtung an den kragenförmigen Behälterrand 12 angepreßt und gleichzeitig der Behälterboden 14 in Anlage an die Anschlagfläche 48 gebracht wird. In dieser Position wird der Zündträger 4 am Außenmantel 22 durch eine z. B. durch Umbördeln des einschubseitigen Endes 56 des Außenmantels 22 über den erweiterten Zündträgerbund 28 hergestellte Randverbindung 58 gesichert, woraufhin auch ohne äußere Druckeinwirkung die durch die abgebogene Randlippe 32 gebildete Befestigungsnaht im zusammengepreßten Zustand und der Behälterboden 14 in Anlage an der Anschlagfläche 48 gehalten bleibt und der Gasgenerator 2 fertigmontiert ist.

Um sicherzustellen, daß die Anschlußstifte 8 des Zünders 6 eine vorgegebene Winkellage bezüglich des Außenmantels 22 einnehmen, können zwischen Zünder 6 und Zündträger 4 einerseits und zwischen Zündträger 4 und Außenmantel 22 andererseits Orientierungsstellen, etwa Orientierungsnasen (nicht gezeigt) vorgesehen sein.

## Patentansprüche

1. Gasgenerator, insbesondere für ein Fahrzeug-Sicherheitssystem, mit einem rohrförmigen Außenmantel (22) und einem in diesen vom Einschubende (56) des Außenmantels aus eingesetzten, hermetisch gekapselten, eine Treibstofffüllung (54) einschließlich eines Zünders (6) enthaltenden Innengehäuse (4, 10), bestehend aus einem im Außenmantel (22) einerseits in Einschubrichtung durch eine stufenförmig abgesetzte Anschlagfläche (44) des Außenmantels und andererseits in entgegengesetzter Richtung durch eine Randverbindung (58) mit dem einschubseitigen Endabschnitt (56) des Außenmantels axial verschiebefest gesicherten Zündträger (4) und einem relativ dünnwandigen, am Zündträger befestigten und durch diesen stirnseitig verschlossenen Treibstoffbehälter (10), dadurch gekennzeichnet, daß der Treibstoffbehälter (10) an seinem zündträgerseitigen Behälterrand (12) kragenförmig über die Anschlagfläche (44) des Außenmantels (22) erweitert ausgebildet und am Zündträger (4) durch eine über den kragenförmigen Behälterrand greifende, durch die Randverbindung (58) zwischen Zündträger und Außenmantel in Anlage an der Anschlagfläche (44) des Außenmantels gehaltene Randlippe (32) des Zündträgers (4) befestigt ist.

2. Gasgenerator nach Anspruch 1, dadurch gekennzeichnet, daß der Zündträger (4) mit einer den kragenförmigen Behälterrand (12) aufnehmenden Ringnut (30) versehen ist, deren radial äußere Nutseitenwand die über den Behälterrand (12) gebördelte Randlippe (32) des Zündträgers (4) bildet.

3. Gasgenerator nach Anspruch 1 oder 2, dadurch gekennzeichnet, daß die Randlippe (32) des Zündträgers (4) durch die durch Umbördeln des Einschubendes (56) des Außenmantels (22) gebildete Randverbindung (58) axial an die Anschlagfläche (44) angepreßt ist.

4. Gasgenerator nach einem der vorhergehenden Ansprüche, gekennzeichnet durch eine zwischen einem in den Treibstoffbehälter (10) eingreifenden Zündträgerabschnitt (26) und einem sockelförmigen Abschnitt (38) des am Zündträger (4) befestigten Zünders (6) angeordnete, mit der Behälterinnenwand zusammenwirkende Ringdichtung (18).

5. Gasgenerator nach einem der vorhergehenden Ansprüche, dadurch gekennzeichnet, daß das Innengehäuse (4, 10) zumindest im Bereich der Randlippe (32) des Zündträgers (4) engsitzend in einer entsprechend abgestuften Innenbohrung (24) des Außenmantels (22) angeordnet ist.

6. Gasgenerator nach einem der vorhergehenden Ansprüche, dadurch gekennzeichnet, daß der Treibstoffbehälter (10) mit seinem abströmseitigen, dem Zündträger (4) gegenüberliegenden Behälterende an einer weiteren, stufenförmig abgesetzten Anschlagfläche (48) des Außenmantels (22) abgestützt ist.

7. Gasgenerator nach einem der vorhergehenden Ansprüche, dadurch gekennzeichnet, daß der Treibstoffbehälter (10) an seinem abströmseitigen, dem Zündträger (4) gegenüberliegenden Behälterende mit einem nach innen gewölbten Behälterboden (14) versehen ist.

8. Gasgenerator nach einem der vorhergehenden Ansprüche, gekennzeichnet durch eine im Treibstoffbehälter (10) im Bereich des abströmseitigen, dem Zündträger (4) gegenüberliegenden Behälterendes abgestützte, die Treibstofffüllung (54) begrenzende, durch die über den kragenförmigen Behälterrand (12) gebogene Randlippe (32) des Zündträgers (4) unter Vorspannung gehaltene Siebscheibe (20).

**Claims**

1. Gas generator, particularly for a vehicle safety system, with a tubular outer casing (22) and a hermetically sealed inner housing (4, 10) which is inserted therein from the insertion end (56) of the outer casing and which contains a propellant filling (54) including an igniter (6) comprising an ignition support (4) secured in an axially non-displaceable manner in the outer casing (22) by a stepped offset stop face (44) of the outer casing on one hand in the insertion direction and on the other hand in the opposite direction by an edge connection (58) with the insertion end portion (56) of the outer casing, a relatively thin-walled propellant container (10) being secured to the ignition carrier support and closed at the end thereby, characterised by the fact that the propellant container (10) by the edge on the side nearer to the ignition carrier being widened to form a collar over the stop face (44) of the outer casing by the edge connection (58) between the ignition carrier and the outer casing.

2. Gas generator in accordance with Claim 1, characterised by the fact that the ignition support (4) is provided with an annular groove (30) which accommodates the collar-shaped edge (12) of the container and of which the radially outermost side wall forms the edge lip (32) of the ignition carrier (4) flanged over the edge (12) of the container.

3. Gas generator in accordance with Claim 1 or 2, characterised by the fact that the edge lip (32) of the ignition support (4) is pressed axially against the stop face (44) by the edge connection (58) formed by the flanging of the insertion end (56) of the outer casing (22).

4. Gas generator in accordance with any one of the foregoing claims, characterised by annular seal (18) which is positioned between a portion (26) of the ignition support extending into the propellant container (10) and a pedestal-shaped portion (38) of the igniter (6) affixed to the ignition carrier (4) and which interacts with the inner wall of the container.

5. Gas generator in accordance with any one of the foregoing claims, characterised by the fact that the internal housing (4, 10) at least in the zone of the edge lip (32) of the ignition support (4) bears tightly in an appropriately stepped internal bore (24) of the outer casing (22).

6. Gas generator in accordance with any one of the foregoing claims, characterised by the fact that the propellant container (10), by the outflow end situated opposite to the ignition support (4) is supported against a further stepped offset stop face (48) of the outer casing (22).

7. Gas generator in acccordance with any one of the preceding claims, characterised by the fact that the propellant container (10), at the outflow end, opposite to the ignition support (4) is provided with a container base (14) curving inwards.

8. Gas generator in accordance with any one of the foregoing claims, characterised by a perforated plate (20) which is supported in the propellant container (10) in the zone of the outflow end of the container, situated opposite the ignition support (4), and which contains the propellant filling (54) and which is prestressed, by the edge lip (32) of the ignition support (4) and turned over the collar-shaped edge (12) of the container.

**Revendications**

1. Générateur de gaz, notamment pour un système de sécurité de véhicule, comprenant une enveloppe extérieure (22) tubulaire et un boîtier intérieur (4, 10) inséré dans celle-ci à partir de l'extrémité d'introduction (56) de l'enveloppe extérieure, encapsulé hermétiquement et contenant une charge de propergol (54) ainsi qu'un allumeur (6), ce boîtier étant constitué par un support d'allumeur (4) immobilisé dans l'enveloppe extérieure (22) contre le déplacement axial d'une part dans le sens de l'introduction par une surface de butée (44) étagée de l'enveloppe extérieure et d'autre part dans le sens opposé par une liaison de bord (58) avec la portion d'extrémité (56) côté introduction de l'enveloppe extérieure, et par un récipient de propergol (10) à paroi relativement mince fixé au support d'allumeur et fermé par celui-ci sur sa face frontale, caractérisé en ce que le récipient de propergol (10) est réalisé, à son bord (12) côté support d'allumeur, en forme de col elargi sur la surface de butée (44) de l'enveloppe extérieure (22) et est fixé au support d'allumeur (4) par une lèvre de bord (32) du support d'allumeur (4) qui passe sur le bord en forme de col du récipient et est maintenue par la liaison de bord (58) entre le support d'allumeur et l'enveloppe extérieure en application contre la surface de butée (44) de l'enveloppe extérieure.

2. Générateur de gaz selon la revendication 1, caractérisé en ce que le support d'allumeur (4) est pourvu d'une gorge annulaire (30), recevant le bord (12) en forme de col du récipient, la paroi latérale radialement extérieure de la gorge formant la lèvre de bord (32) du support d'allumeur (4) sertie sur le bord (12) du récipient.

3. Générateur de gaz selon la revendication 1 ou 2, caractérisé en ce que la lèvre de bord (32) du support d'allumeur (4) est pressée axialement contre la surface de butée (44) par la liaison de bord (58) formée par le sertissage de l'extrémité d'introduction (56) de l'enveloppe exterieure (22).

4. Générateur de gaz selon l'une quelconque des revendications précédentes, caractérisé par un joint annulaire (18) disposé entre une portion (26) du support d'allumeur pénétrant dans le récipient de propergol (10) et une portion en forme de socle (38) de l'allumeur (6) fixé au support d'allumeur (4), ce joint coopérant avec la paroi intérieure du récipient.

5. Générateur de gaz selon l'une quelconque des revendications précédentes, caractérisé en ce que le boîtier intérieur (4, 10) est disposé de manière serrée au moins dans la zone de la lèvre de bord (32) du support d'allumeur (4) dans un trou intérieur (24), étagé en conséquence, de l'enveloppe extérieure (22).

6. Générateur de gaz selon l'une quelconque des revendications précédentes, caractérisé en ce que le récipient de propergol (10) porte par son extrémité, côté sortie de gaz, opposée au support d'allumeur (4), contre une autre surface de butée (48) étagée de l'enveloppe extérieure (22).

7. Générateur de gaz selon l'une quelconque des revendications précédentes, caractérisé en ce que le récipient de propergol (10) est pourvu à son extrémité côté sortie de gaz, opposée au support d'allumeur (4), d'un fond (14) bombé vers l'intérieur.

8. Générateur de gaz selon l'une quelconque des revendications précédentes, caractérisé par un disque de filtrage (20) en appui dans le récipient de propergol (10) dans la zone de l'extrémité côté sortie de gaz, opposée au support d'allumeur (4), ce disque délimitant la charge de propergol (54) et étant maintenu sous précontrainte par la lèvre de bord (32) du support d'allumeur (4) sertie sur le bord (12) en forme de col du récipient.

FIG. 1

1

FIG. 2